# EUROPÄISCHE PATENTSCHRIFT

(11) **EP 1 748 211 B1**
(45) Veröffentlichungstag und Bekanntmachung des Hinweises auf die Patenterteilung: **24.02.2010**
(21) Anmeldenummer: 06015207.1
(22) Anmeldetag: 21.07.2006
(51) Int. Cl.: F16D 65/08

(54) **Bremsbacke für eine Fahrzeug-Trommelbremse sowie zweiteiliger Reibbelag hierfür**
Brake shoe for a vehicle drum brake and a corresponding two piece friction lining
Machoire d'un frein à tambour et un garniture de friction à deux pièces correspondant

(30) Priorität: 28.07.2005 DE 102005036030
(43) Veröffentlichungstag der Anmeldung: 31.01.2007
(73) Patentinhaber: BPW Bergische Achsen KG, 51674 Wiehl (DE)
(72) Erfinder: Mollerus, Bernd, 51674 Wiehl (DE); Köchl, Hans-Ulrich, 51674 Wiehl (DE)
(74) Vertreter: Christophersen & Partner

(56) Entgegenhaltungen:
- WO-A-2005/035328
- US-A- 2 016 280
- US-A- 3 467 229

## Beschreibung

Die Erfindung betrifft eine Bremsbacke für eine Fahrzeug-Trommelbremse mit einem segmentförmig gebogenen Belagträger und einem auf dessen Außenseite befestigten Reibbelag, der sich aus zwei in Drehrichtung der Trommelbremse hintereinander angeordneten Teilbelägen zusammensetzt, deren Dicke, über die Länge der Teilbeläge betrachtet, eine Belag-Dickendifferenz aufweist.

Des weiteren betrifft die Erfindung einen zweiteiligen Reibbelag zur Befestigung auf der Außenseite eines segmentförmig gebogenen Belagträgers einer Bremsbacke einer Fahrzeug-Trommelbremse, wobei die Dicke der Teilbeläge, über deren Länge betrachtet, eine Belag-Dickendifferenz aufweist.

Bremsbacken für Fahrzeug-Trommelbremse mit zweiteilig aufgebauten Reibbelägen sind in vielfältigen Ausführungsformen bekannt, z.B. aus der DE 196 49 487 C2. Die Bremsbacke besteht aus einem zu einem Kreissegment gebogenen Belagträger, mindestens einem innenseitig an dem Belagträger befestigten und diesen aussteifenden Steg, sowie im Bereich der Enden des Steges angeordneten Abstützelementen zur Einleitung der Bremskräfte in die Bremsbacke. Auf der Außenseite des Belagträgers ist der Reibbelag befestigt, was in der Regel durch Vernieten erfolgt. Des weiteren ist es üblich, den Reibbelag zweiteilig zu gestalten, d.h. aus zwei Teilbelägen zusammenzusetzen, die getrennt mit dem gemeinsamen Belagträger vernietet werden.

Aus der US 2,016,280 und der gattungsbildenden WO 2005/035328 A2 ist es bekannt, einen zusätzlichen Formschluss zwischen Teilbelägen und deren Belagträger dadurch herzustellen, daß der Belagträger mit Ausnehmungen versehen ist, in die innen an den Teilbelägen ausgebildete radiale Vorsprünge eingreifen. In der WO 2005/035328 A2 ist ferner beschrieben, dass die Dicke der einzelnen Teilbeläge, über deren Länge betrachtet, eine Belag-Dickendifferenz aufweisen kann.

Aufgabe der Erfindung ist es, Fehler bei der Montage des zweiteiligen Reibbelages auf dem zugehörigen Belagträger zu vermeiden, wobei es bei sehr starkem Verschleiß des Reibbelages zu keinem anderen Kontakt als dem zwischen Belag und Reibfläche an der Bremstrommel kommen soll.

Zur Lösung der Aufgabe wird eine Bremsbacke mit den in Patentanspruch 1 angegebenen Merkmalen sowie ferner ein zweiteiliger Reibbelag mit den in Patentanspruch 8 angegebenen Merkmalen vorgeschlagen.

Hierbei ist die Bremsbacke **dadurch gekennzeichnet, daß** die Teilbeläge mit Ausnehmungen versehen sind, daß an den Orten dieser Ausnehmungen der Belagträger auf seiner Außenseite einen korrespondierenden radialen Vorsprung aufweist, und daß das radiale Maß des Vorsprungs gleich oder geringer als die Belag-Dickendifferenz ist.

Der zweiteilige Reibbelag ist **dadurch gekennzeichnet, daß** jeder der beiden Teilbeläge mit Ausnehmungen versehen ist, die zu radialen Vorsprüngen auf der Außenseite des Belagträgers korrespondierend gestaltet sind, und daß die Belag-Dickendifferenz gleich oder größer als das radiale Maß des Vorsprungs ist.

Fehler bei der Montage der Teilbeläge des zweiteiligen Reibbelages lassen sich auf diese Weise vermeiden, da eine richtige Montage nur dann möglich ist, wenn die radialen Vorsprünge des einen beteiligten Elementes in die an demselben Ort angeordneten Ausnehmungen des anderen beteiligten Elementes hineinragen. Indem die radiale Höhe des an dem Belagträger ausgebildeten Vorsprungs geringer und höchstens gleich der Belag-Dickendifferenz ist, kann es bei sehr starkem Verschleiß der Reibbeläge zu keinem Kontakt des radialen Vorsprungs mit der Reibfläche an der Bremstrommel kommen.

Gemäß einer Ausgestaltung kann der Belagträger auf seiner Außenseite einen radialen Vorsprung von solcher Längserstreckung aufweisen, daß dieser gleichzeitig in Ausnehmungen beider Teilbeläge hineinragt.

Gemäß einer weiteren Ausgestaltung können die Vorsprünge in Verbindung mit den Ausnehmungen den jeweiligen Teilbelag seitlich zentrieren.

Gemäß einer weiteren Ausgestaltung können die Vorsprünge in Verbindung mit den Ausnehmungen den Reibbelag in Drehrichtung der Trommelbremse gegenüber dem Belagträger abstützen.

Weitere Vorteile und Einzelheiten werden nachfolgend anhand der zugehörigen Zeichnungen erläutert. Darin zeigen:
- Figur 1: in perspektivischer Darstellung eine komplette Bremsbacke für eine Fahrzeug-Trommelbremse;
- Figur 2: die Bremsbacke in einer Seitenansicht;
- Figur 3: die in Figur 2 mit III bezeichnete Einzelheit, jedoch in einem Längsschnitt durch die Bremsbacke und
- Figur 4: eine Teilansicht der Bremsbacke gemäß dem Ansichtspfeil IV in Figur 3.

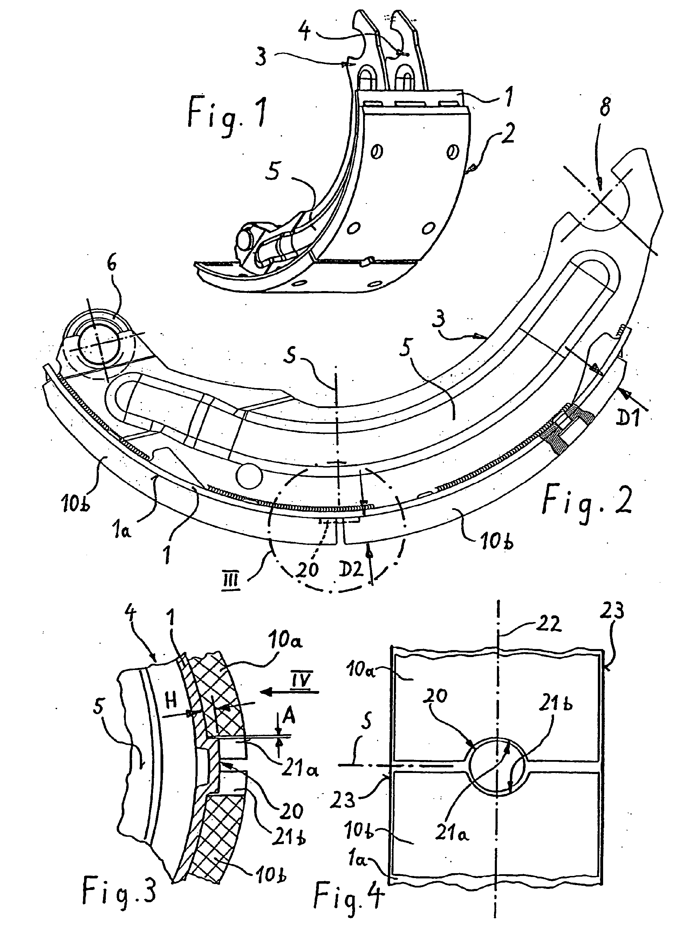

Die in Figur 1 perspektivisch dargestellte Bremsbacke besteht aus einem kreissegmentförmig gebogenen Belagträger 1, auf dessen Außenseite ein zweiteilig gestalteter Reibbelag 2 befestigt ist. Zur Befestigung dienen die in Figur 1 gut erkennbaren Nieten. Infolge dieser Nietverbindung lassen sich die Reibbeläge, nachdem diese verschließen sind, gegen neue Reibbeläge austauschen, wohingegen die übrigen Einzelteile der Bremsbacke weiterhin verwendet werden.

Innenseitig stützt sich gegen den Belagträger 1 ein erster Steg 3 und ein hierzu paralleler zweiter Steg 4 ab. Die Stege 3, 4 versteifen den Belagträger 1 sowie insgesamt die Bremsbacke. Beide Stege 3, 4 sind mit jeweils einer darin durch Kaltverformung hergestellten Sicke 5 versehen, die sich längs der Stege 3, 4 erstreckt. Am einen Ende der Stege 3, 4 ist eine Bremsrolle 6 gelagert, mit der sich die Bremsbacke z.B. gegenüber einem Spreiznocken der Trommelbremse abstützt. Am anderen Ende sind die Stege 3, 4 mit einer gabelförmigen Lageröffnung 8 versehen. Mittels dieser Öffnungen 8 stützt sich die Bremsbacke an einem ortsfesten Bolzen der Trommelbremse ab. Der Bolzen übernimmt auf diese Weise als Widerlager einen Teil der von dem Spreiznocken der Trommelbremse erzeugten Bremskräfte.

Der Reibbelag 2 ist zweiteilig mit einem ersten Teilbelag 10a und einem hiervon getrennten zweiten Teilbelag 10b. Beide Beläge 10a, 10b sind zwar identisch geformt, müssen jedoch in Bezug auf die Symmetrieachse S spiegelbildlich zueinander auf dem Belagträger befestigt werden. Die Dicke der beiden Beläge 10a, 10b ist, über ihre Länge in Umfangsrichtung betrachtet, nicht gleich bleibend. Vielmehr ist die Dicke D2 der Beläge dort am größten, wo die Teilbeläge 10a, 10b fast aneinander treffen. Am jeweils anderen, außen liegenden Ende des Reibbelages ist die Dicke D1 hingegen am geringsten. Betrachtet man daher beide Teilbeläge 10a, 10b gemeinsam, entspricht deren Kontur in etwa der einer Sichel mit etwas größerer Dicke im Zentrum und abnehmender Dicke zu den Enden hin. Unter anderem wegen dieser sich über die Länge ändernden Dicke muß vermieden werden, daß bei der Montage der Beläge 10a, 10b diese in vertauschter Position auf dem Belagträger 1 befestigt werden.

Um Montagefehler zu vermeiden, sind der Belagträger 1 einerseits und die beiden Teilbeläge 10a, 10b des Reibbelages andererseits mit aneinander angepaßten Strukturen versehen, welche im Folgenden anhand der Figuren 3 und 4 erläutert werden.

Der Belagträger 1 ist in jenem mittleren Bereich, in dem sich die beiden Teilbeläge 10a, 10b gegenüberstehen, mit einem nach außen über die Belagträgerfläche ragenden Vorsprung 20 versehen. Dieser hat die Hohe H. Er kann ein separates Formelement sein oder, wie beim Ausführungsbeispiel, eine leichte radiale Verformung des Materials des plattenförmigen Belagträgers selbst. Dort wo sich der radiale Vorsprung 20 befindet, sind die Beläge 10a, 10b mit Ausnehmungen 21a, 21b versehen. Deren Größe und Gestalt ist so, daß der radiale Vorsprung 20 und die beiden Ausnehmungen 21a, 21b aneinander angepaßt sind, wobei jedoch ein geringer seitlicher Abstand A (Fig. 3) verbleibt.

Die Ausnehmungen 21a, 21b sind beim Ausführungsbeispiel jeweils als halbkreisförmige Ausnehmungen gestaltet, und erstrecken sich aus fertigungstechnischen Gründen über die gesamte Dicke D2 der Reibbeläge.

Figur 4 läßt erkennen, daß sich der radiale Vorsprung 20 und damit die Ausnehmungen 21a, 21b in der Mitte der Breite der Bremsbacke befinden. Anstelle dieser zentralen Struktur können jedoch auch symmetrisch beiderseits der Mittellinie 22 derartige Strukturen angeordnet werden.

Der Vorsprung 20 ist gemäß Fig. 4 in Draufsicht rund gestaltet. Er kann aber auch asymmetrisch gestaltet sein. In diesem Fall sind auch die Ausnehmungen 21a, 21b entsprechend asymmetrisch gestaltet. Ferner ist es möglich, den Vorsprung 20 zu einer Längskante 23 hin versetzt am Belagträger 1 anzuordnen.

Es wird erreicht, daß die Vorsprünge bzw. Ausnehmungen infolge ihres formschlüssigen Ineinandergreifens zusätzlich eine Zentrierfunktion für die Reibbeläge übernehmen. Insbesondere zentrieren die Vorsprünge 20 in Verbindung mit den Ausnehmungen 21a, 21b den jeweiligen Teilbelag 10a, 10b in seitlicher Richtung. Ferner stellen die Vorsprünge in Verbindung mit den Ausnehmungen eine Montagehilfe bei der Bestückung der Bremsbacke mit den Belägen dar. Nach der Montage vermögen sie den Reibbelag in Drehrichtung der Trommelbremse gegenüber dem Belagträger abzustützen, um so die vorhandene Nietverbindung noch zu unterstützen.

Damit es bei sehr starkem Verschleiß der Reibbeläge zu keinem Kontakt des radialen Vorsprungs 20 mit der Reibfläche an der Bremstrommel kommt, sollte die radiale Höhe H des Vorsprungs 20 (radial in Bezug auf die an eine Bremstrommel angepaßte Krümmung der jeweiligen Bremsbacke) geringer und höchstens gleich der Belag-Dickendifferenz sein, d. h. der Differenz zwischen den in der Figur 2 eingezeichneten Belagdicken D2 und D1.

### Bezugszeichenliste

- 1: Belagträger
- 1a: Außenseite
- 2: Reibbelag
- 3: Steg
- 4: Steg
- 5: Sicke
- 6: Bremsrolle
- 8: Lageröffnung
- 10a: Teilbelag
- 10b: Teilbelag
- 20: radialer Vorsprung
- 21a: Ausnehmung
- 21b: Ausnehmung
- 22: Mittellinie
- 23: Längskante

- A: Abstand
- D1: Dicke
- D2: Dicke
- H: Höhe
- S: Symmetrieachse

## Patentansprüche

1. Bremsbacke für eine Fahrzeug-Trommelbremse mit einem segmentförmig gebogenen Belagträger (1) und einem auf dessen Außenseite (1a) befestigten Reibbelag (2), der sich aus zwei in Drehrichtung der Trommelbremse hintereinander angeordneten Teilbelägen (10a, 10b) zusammensetzt, deren Dicke (D1, D2), über die Länge der Teilbeläge (10a, 10b) betrachtet, eine Belag-Dickendifferenz aufweist,
**dadurch gekennzeichnet,**
**daß** die Teilbeläge (10a, 10b) mit Ausnehmungen (21 a, 21 b) versehen sind, daß an den Orten dieser Ausnehmungen (21 a, 21 b) der Belagträger (1) auf seiner Außenseite (1a) einen korrespondierenden radialen Vorsprung (20) aufweist, und daß das radiale Maß (H) des Vorsprungs (20) gleich oder geringer als die Belag-Dickendifferenz ist.

2. Bremsbacke nach Anspruch 1,
**dadurch gekennzeichnet,**
**daß** beide Teilbeläge (10a, 10b) dieselbe Form aufweisen und gegeneinander austauschbar sind.

3. Bremsbacke nach Anspruch 1 oder Anspruch 2,
**dadurch gekennzeichnet,**
**daß** der Belagträger (1) auf seiner Außenseite (1a) einen radialen Vorsprung (20) von solcher Längserstreckung ,aufweist, daß dieser gleichzeitig in Ausnehmungen (21a, 21b) beider Teilbeläge (10a, 10b) hineinragt.

4. Bremsbacke nach einem der vorangehenden Ansprüche,
**dadurch gekennzeichnet,**
**daß** die Vorsprünge (20) in Verbindung mit den Ausnehmungen (21a, 21b) den jeweiligen Teilbelag (10a, 10b) seitlich zentrieren.

5. Bremsbacke nach einem der vorangehenden Ansprüche,
**dadurch gekennzeichnet,**
**daß** die Vorsprünge (20) in Verbindung mit den Ausnehmungen (21a, 21b) den Reibbelag (2) in Drehrichtung der Trommelbremse gegenüber dem Belagträger (1) abstützen.

6. Bremsbacke nach einem der vorangehenden Ansprüche,
**dadurch gekennzeichnet,**
**daß** die Ausnehmungen (21a, 21b) einen geringen seitlichen Abstand (A) zu dem Vorsprung (20) aufweisen.

7. Zweiteiliger Reibbelag (2) zur Befestigung auf der Außenseite eines segmentförmig gebogenen Belagträgers einer Bremsbacke einer Fahrzeug-Trommelbremse, wobei die Dicke (D1, D2) der Teilbeläge (10a, 10b) über deren Länge betrachtet, eine Belag-Dickendifferenz aufweist,
**dadurch gekennzeichnet,**
**daß** jeder der beiden Teilbeläge (10a, 10b) mit Ausnehmungen (21 a, 21 b) versehen ist, die zu radialen Vorsprüngen (20) auf der Außenseite des Belagträgers korrespondierend gestaltet sind, und daß die Belag-Dickendifferenz gleich oder größer als das radiale Maß (H) des Vorsprungs (20) ist.

8. Reibbelag nach Anspruch 8,
**dadurch gekennzeichnet,**
**daß** beide Teilbeläge (10a, 10b) dieselbe Form aufweisen.

## Claims

1. Brake shoe for a vehicle drum brake having a lining carrier (1) curved in the shape of a segment, and a friction lining (2) fastened to the outer side (1a) of the lining carrier, the friction lining being composed of two partial linings (10a, 10b) which are arranged one behind the other in the direction of rotation of the drum brake and the thickness (D1, D2) of which, viewed over the length of the partial linings (10a, 10b), has a difference in lining thickness,
**characterised**
**in that** the partial linings (10a, 10b) are provided with recesses (21a, 21b), in that, at the locations of these recesses (21a, 21b), the lining carrier (1) has on its outer side (1a) a corresponding radial projection (20), and in that the radial dimension (H) of the projection (20) is equal to or less than the difference in lining thickness.

2. Brake shoe according to Claim 1,
**characterised**
**in that** both partial linings (10a, 10b) have the same shape and are interchangeable.

3. Brake shoe according to Claim 1 or Claim 2,
**characterised**
**in that** the lining carrier (1) has on its outer side (1a) a radial projection (20) of such a longitudinal extent that this projection projects into recesses (21a, 21b) of both partial linings (10a, 10b) at the same time.

4. Brake shoe according to one of the preceding claims,
**characterised**
**in that** the projections (20), in conjunction with the recesses (21a, 21b), laterally centre the respective partial lining (10a, 10b).

5. Brake shoe according to one of the preceding claims,
**characterised**
**in that** the projections (20), in conjunction with the recesses (21a, 21b), support the friction lining (2) with respect to the lining carrier (1) in the direction of rotation of the drum brake.

6. Brake shoe according to one of the preceding claims,
**characterised**
**in that** the recesses (21a, 21b) have a small lateral clearance (A) from the projection (20).

7. Two-part friction lining (2) for fastening to the outer side of a lining carrier, curved in the shape of a segment, of a brake shoe of a vehicle drum brake, the thickness (D1, D2) of the partial linings (10a, 10b), viewed over their length, having a difference in lining thickness,
**characterised**
**in that** each of the two partial linings (10a, 10b) is provided with recesses (21a, 21b) which are shaped in a manner corresponding to radial projections (20) on the outer side of the lining carrier, and in that the difference in lining thickness is equal to or greater than the radial dimension (H) of the projection (20).

8. Brake shoe according to Claim 8,
**characterised**
**in that** both partial linings (10a, 10b) have the same shape.

## Revendications

1. Segment de frein pour un frein à tambour pour véhicule, comportant un support de garniture (1), cintré en forme de segment de cercle, et une garniture de friction (2), fixée sur la face extérieure (1a) de celui-ci et formée par deux garnitures partielles (10a, 10b), qui sont disposées l'une derrière l'autre dans le sens de rotation du frein à tambour et dont l'épaisseur (D1, D2), considérée sur 1a longueur des garnitures partielles (10a,10b), présente une différence d'épaisseur de garniture,
**caractérisé en ce que** les garnitures partielles (10a, 10b) sont munies d'évidements (21a, 21b), **en ce que**, au niveau des emplacements de ces évidements (21a, 21b), le support de garniture (1) comporte sur sa face extérieure (1a) une saillie radiale (20) correspondante, et **en ce que** la dimension radiale (H) de la saillie (20) est égale ou inférieure à la différence d'épaisseur de garniture.

2. Segment de frein selon la revendication 1, **caractérisé en ce que** les deux garnitures partielles (10a, 10b) ont la même forme et peuvent être échangées l'une contre l'autre.

3. Segment de frein selon la revendication 1 ou 2, **caractérisé en ce que** le support de garniture (1) comporte sur sa face extérieure (1a) une saillie radiale (20) avec une dimension longitudinale telle que celle-ci s'engage simultanément dans les évidements (21a, 21b) des deux garnitures partielles (10a, 10b).

4. Segment de frein selon l'une quelconque des revendications précédentes, **caractérisé en ce que** les saillies (20), en liaison avec les évidements (21a, 21b), centrent latéralement chacune des garnitures partielles (10a, 10b).

5. Segment de frein selon l'une quelconque des revendications précédentes, **caractérisé en ce que** les saillies (20), en liaison avec les évidements (21a, 21b), supportent la garniture de friction (2) par rapport au support de garniture (1) dans le sens de rotation du frein à tambour.

6. Segment de frein selon l'une quelconque des revendications précédentes, **caractérisé en ce que** les évidements (21a, 21b) ont une faible distance (A) latérale par rapport à la saillie (20).

7. Garniture de friction (2) en deux parties, destinée à être fixée sur la face extérieure d'un support de garniture, cintré en forme de segment de cercle, d'un segment de frein d'un frein à tambour pour véhicule, l'épaisseur (D1, D2) des garnitures partielles (10a, 10b), considérée sur la longueur de celles-ci, présentant une différence d'épaisseur de garniture,
**caractérisée en ce que** chacune des deux garnitures partielles (10a, 10b) est munie d'évidements (21a, 21b), qui sont réalisés de manière à correspondre à des saillies radiales (20) sur la face extérieure du support de garniture, et **en ce que** la différence d'épaisseur de garniture est égale ou supérieure à la dimension radiale (H) de la saillie (20).

8. Garniture de friction selon la revendication 7, **caractérisée en ce que** les deux garnitures partielles (10a, 10b) ont la même forme.
